# EUROPEAN PATENT APPLICATION

(11) **EP 1 742 462 A1**
(43) Date of publication of application: **10.01.2007**
(21) Application number: 05106242.0
(22) Date of filing: 08.07.2005
(51) Int. Cl.: H04N 5/225, H04N 5/235, G03B 15/05

(54) **Digital image capturing device with scan type flash**

(71) Applicant: Koninklijke Philips Electronics N.V., 5621 BA Eindhoven (NL); Lumileds Lighting U.S., LLC, San Jose, California 95131 (US)
(72) Inventor: The designation of the inventor has not yet been filed
(74) Representative: Pet, Robert Jacob

(57) **Abstract**

The invention relates to a digital image capturing device (10) for capturing a scene. The device comprises a two-dimensional array of light-exposable cells (12) capable of capturing said scene and one or more light-emitting diodes (4) capable of illuminating said scene. A controller (13) of said device is arranged to sequentially expose one or more of said light-exposable cells of said two-dimensional array to capture said scene and to selectively vary the illumination of various parts of said scene by said one or more light-emitting diodes during capturing of said scene in synchronization with the exposure of one or more of said cells.

## Description

### FIELD OF THE INVENTION

The invention relates to a digital image capturing device and to a computer program loadable in a controller of such a digital image capturing device.

### BACKGROUND OF THE INVENTION

Recently, digital image capturing devices, hereinafter also referred to as digital cameras, that pick up an image of an object, using a CCD type or MOS type solid state image pickup device, and that record corresponding image data on a recording medium, such as a flash memory, have generally diffused. Many digital cameras have a flash or strobe device, often a xenon discharge tube, similar to that of a conventional camera.

More and more portable devices, such as mobile phones and personal digital assistants (PDAs), are equipped with digital cameras as well. Under conditions of insufficient light, light-emitting diodes (LEDs) are suitable for performing a flash illumination function for these types of applications in view of their size. Also, LEDs can be used in a continuous mode (torch mode) for capturing small films.

However, LEDs can only deliver a small amount of light as compared to conventional xenon discharge tube flash devices. Moreover, as most portable devices suffer from a limited amount of available power and a limited capability of supplying a high peak current, flash illumination may be problematic.

US 2005/0046739 discloses a system and method using light emitting diodes to form a strobe for an image capturing device. In the system and method, the intensity of the light emitted from the LEDs during an image capture process is controlled such that the intensity of light emitted by one region of LEDs is different from the intensity of light emitted by another region of LEDs to correct for image distorting effects caused internally or externally to the image capturing device.

### SUMMARY OF THE INVENTION

It is an object of the invention to provide an improved digital image capturing device.

To this end, a digital image capturing device for capturing a scene is provided, comprising:
- a two-dimensional array of light-exposable cells capable of capturing said scene;
- one or more light-emitting diodes capable of illuminating said scene, and
- a controller arranged to sequentially expose one or more of said light-exposable cells of said two-dimensional array to capture said scene and to selectively vary the illumination of various parts of said scene by said one or more light-emitting diodes during capturing of said scene in synchronization with the exposure of one or more of said cells.

Further, a computer program loadable in a controller of a digital image capturing device comprising a two-dimensional array of light-exposable cells for capturing a scene and one or more light-emitting diodes for illuminating said scene is provided, wherein said computer program comprises software code portions for sequentially exposing one or more of said light-exposable cells of said two-dimensional array to capture said scene and for selectively varying the illumination of various parts of said scene by said one or more light-emitting diodes during capturing of said scene in synchronization with the exposure of one or more of said cells.

By scanning the light generated by the light-emitting diodes over the scene synchronized with the exposure of the cells of the image capturing device, less illumination light is wasted for parts of the scene that are not recorded at a particular time during capturing of the scene. Consequently, power is saved or the light intensity for a particular part of the scene can be enhanced during illumination by a factor 2-4, dependent on the embodiment.

It should be appreciated that variation of the illumination of the scene can e.g. be accomplished by switching one or more LEDs on and off as well as or in combination with varying the light intensity emitted from one or more of the LEDs between e.g. a low light emitting state and a high light emitting state. Further, it is noted that in the art LEDs are known with a plurality of electrodes for a single LED that divide this LED in individually controllable cells to control the light output of this LED. Such LEDs may also be applied for the digital camera according to the invention.

The embodiments of the invention as defined in claim 2 and 9 have the advantage of a suitable means for selectively illuminating various parts of the scene. Optical means are used to direct the generally diffuse light emitted from the LEDs, In particular, the optical means allow enhancement of the light intensity of a part of the scene. In general the optical means may comprise or consist of refractive, diffractive, holographic and/or refractive optical elements. Suitable optical means for illuminating parts of the scene include prism shaped lenses. These lenses may be included in addressable/controllable optics such as prism shaped electro wetting lenses or prism shaped liquid crystal lenses. In this manner, it can be ensured that only the relevant part of the scene is illuminated and optical power of the light-emitting diodes can be concentrated or enhanced where useful.

The embodiments of the invention as defined in claim 3 and 10 have the advantage that the convenient row-wise or line-wise exposure of cells of the digital camera, resulting from the row-wise readout of the cells, is followed by the scanning of the illumination light.

The embodiments of the invention as defined in claim 4 and 11 have the advantage of offering a possibility of highlighting the center part of a scene correlated to the part of the scene at which the digital camera zooms in or to reduce the peak current.

The embodiment of claim 5 offers a relatively simple embodiment for selectively varying the illumination of various parts of a scene in synchronization with light-exposable cells of the two-dimensional array by switching cells of the LED(s) on and off or by varying the current through the cells of the LED(s).

The embodiment of claim 6 has the advantage of only illuminating a part of a scene during a preparatory frame to reduce power or current.

The invention will be further illustrated with reference to the attached drawings, which schematically show preferred embodiments according to the invention. It will be understood that the invention is not in any way restricted to these specific and

### preferred embodiments.

### BRIEF DESCRIPTION OF THE DRAWINGS

In the drawings:
Fig. 1 shows a digital image capturing device with a plurality of illumination LEDs implemented in a mobile phone according to an embodiment of the invention;
Fig. 2 shows a schematic diagram of a digital image capturing device;
Fig. 3 shows a conventional exposure scheme for cells of a digital image capturing device, and
Figs. 4-8 show a embodiments, wherein illumination of a part of a scene is synchronized with exposure of cells.

### DETAILED DESCRIPTION OF THE DRAWINGS

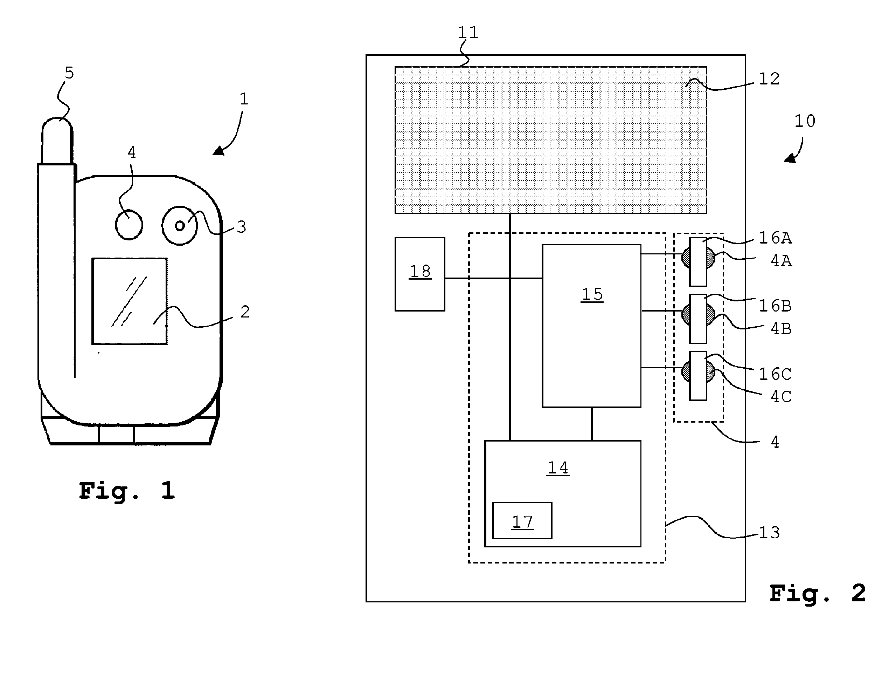

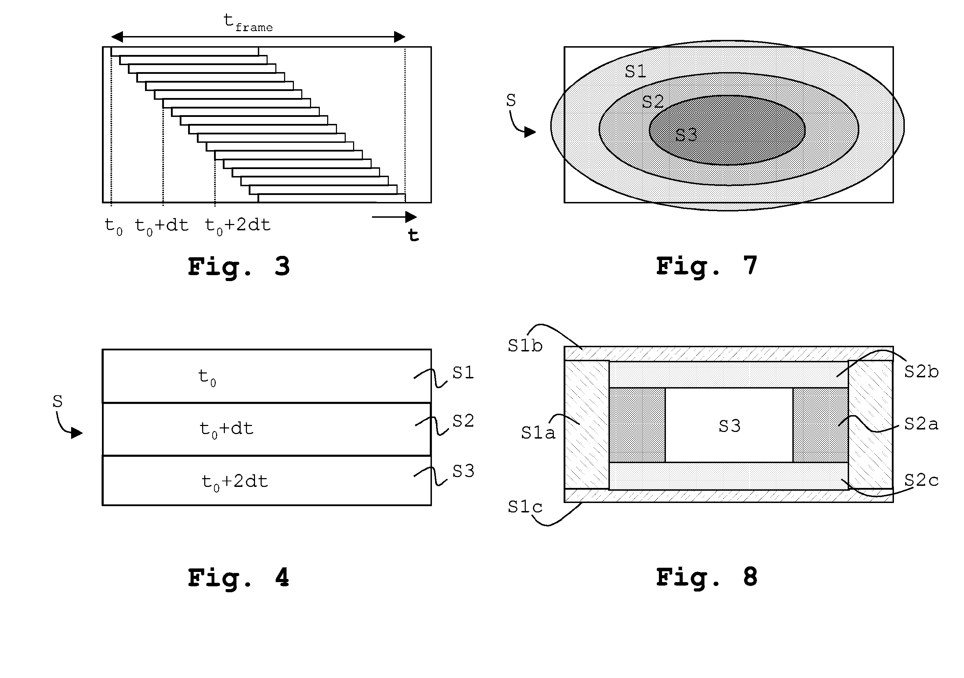

Figs. 1 and 2 show a mobile phone 1 provided with a display 2 and a lens 3 of a digital image capturing device 10, hereinafter also referred to as digital camera 10. The mobile phone 1 has one or more light-emitting diodes (LEDs) 4 for illuminating a scene to be captured by a CMOS or CCD sensor 11 comprising a two-dimensional array of light-exposable cells 12, known as such in the art. When a scene is captured, each light-exposable cell 12 obtains information of a corresponding part of the scene. Obviously, for many applications more cells 12 than shown will be applied to increase the resolution of the captured image. In general, a scene with an angle of 56 degrees horizontally and 44 degrees vertically may be illuminated by the LEDs 4. LEDs 4 have the advantage that these can be switched rapidly between an off and on state.

The mobile phone 1 further has an antenna 5 for communication purposes.

It should be appreciated that the invention can be implemented in other wired or wireless portable devices, including digital cameras, personal digital assistants (PDAs) etc.

A controller 13 has a microcomputer 14 and a driver 15 connected to the plurality of power LEDs 4A, 4B, 4C. Each LED is provided with an optical means 16A, 16B, 16C capable of directing light generated by the corresponding LED 4A, 4B, 4C. The LEDs 4A, 4B, 4C and/or the optical means 16A, 16B, 16C are controllable by the driver 15 in accordance with instructions received from the microcomputer 14. The microcomputer 14 has a memory 17 filled with instructions for, amongst other tasks, the driver 15 and exposing the cells 12. In this way synchronization of exposure and illumination may be accomplished. Finally, a power supply 18 for the driver 15 is shown.

It should be appreciated that alternative or different means may be employed within the digital image capturing device 10 . E.g. a data transfer link may be present for obtaining information about e.g. zoom position or exposure time, in case synchronization is performed by a single signal relating to the beginning of an exposure frame. Further, it should be appreciated that the functionality is not necessarily implemented by software code on a microcomputer. E.g. a hardware implementation is possible with control circuitry or with a memory comprising a look-up table. In this look-up table, the exposure time of the cells 12 or a zoom-position of a lens (not shown) of the digital camera 10 may e.g. be linked to a corresponding timed sequence of illumination of selected parts of the scene.

In Fig. 3 a well-known sequentially line-wise exposure scheme of cells 12 is illustrated. In this scheme, each line of cells 12 is exposed with a certain delay with respect to a previous line of cells 12. Accordingly, the information captured by the cells in the previous line of cells 12 can already be read out while the subsequent line is still capturing information from the scene. The total exposure time of the cells is defined as t_{frame}.

The instructions in the memory 17 of the controller 13 are adapted to sequentially expose one or more of the light-exposable cells 12 to capture a scene and to selectively vary the illumination of various parts of said scene by said one or more LEDs 4 during capturing of said scene in synchronization with the exposure of one or more of said cells 12. Accordingly, by scanning the illumination light of the LEDs 4 over the scene in accordance with the exposure of the cells 12, illumination is only on when it is useful and power of the mobile phone 1 is saved.

In Fig. 4, a scene S is shown that is selectively illuminated in three parts in synchronization with the exposure scheme of cells 12 as illustrated in Fig. 3. At time to, when a first series of lines of cells 12 starts to get exposed, microcomputer 14 instructs driver 15 to drive LED 4A and/or optical means 16A to illuminate only the upper part S1 of the scene S to be illuminated. At time t₀+dt, when a second series of lines of cells 12 starts to get exposed, LED 4B and optical means 16B are driven as to illuminate a second part S2 of the scene S. At time t₀+2dt, when a third series of lines of cells 12 start to get exposed, LED 4C and optical means 16C are driven as to illuminate a third part S3 of the scene S. The optical means 16A, 16B, 16C may e.g. include a prism shaped lens.

It should be noted that, although the present embodiments shows three LEDs 4A, 4B, 4C, also a single LED, two LEDs or more than three LEDs can be used for performing the invention. The number of LEDs 4 is e.g. determined by the total light flux required for illuminating the scene and the amount of parts that should be distinguished within a scene. The LEDs 4 are preferably able to illuminate the complete scene in combination.

Further, it should be noted that it is not necessary for each LED or LEDs 4A, 4B, 4C to have a corresponding controllable optical means 16A, 16B, 16C. The optical means do not need to be controllable. Further, it is noted that the LEDs 4 and optical means 16 may be integrated in a single device.

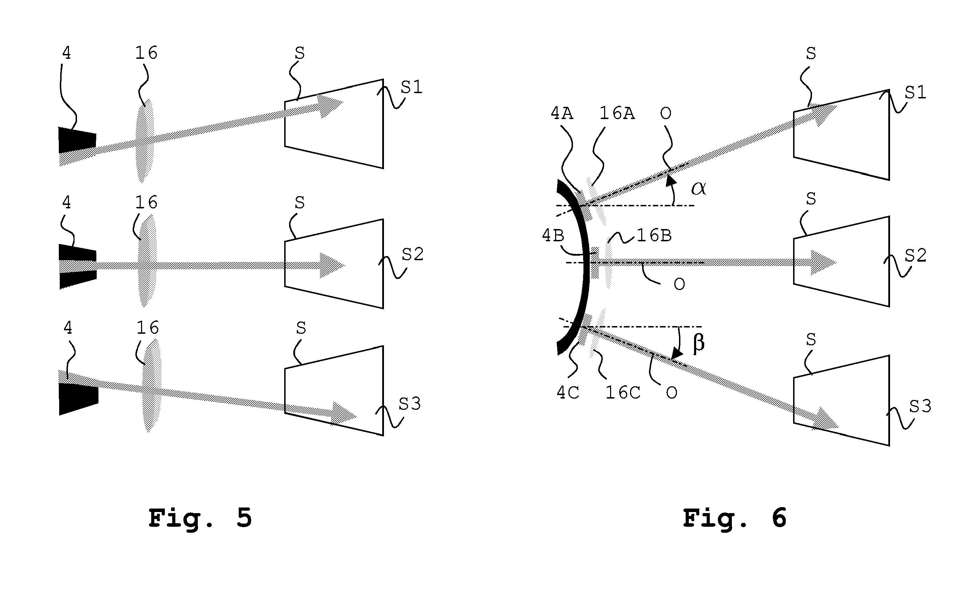

A single LED 4 may be driven to emit one or more light intensities. Further, a single LED 4 may have one or more cells defined by patterning of the electrodes that can be controlled individually. An embodiment applying such a configuration is schematically illustrated in Fig. 5, wherein a single non-controllable optical means 16 is employed to selectively illuminate parts S1, S2, S3 of a scene S in synchronization with exposure of the cells 12 by controlling the LED 4 via its patterned electrodes.

In another embodiment, combinations of LEDs 4A, 4B, 4C with optical means 16A, 16B, 16C may be configured such that the optical axis O is aimed at a part S1, S2, S3 of the scene S to be illuminated. This embodiment is schematically illustrated in Fig. 6, wherein the configuration is such that the LEDs 4A and 4C and their corresponding optical means 16A and 16C are positioned under an angel α, β.

In Fig. 7, a further embodiment of the invention is shown, wherein the optical means 16A, 16B, 16C include a zoom lens, i.e. an active optical means. If a zoom lens is used, the field of view is dependent on the zoom position. For a small field of view (large zoom) the scene to be illuminated is smaller and the optical energy is concentrated thereon. If optics collimate the light, less current for the LEDs 4 is necessary to achieve the required illumination for the smaller scene.

Instead of subdividing the scene S in blocks S1, S2, S3 as was illustrated in Fig. 4, concentric parts S1, S2, S3 of the scene S are made. The microcomputer 14 instructs the driver 15 to drive the LEDs 4A-4C and/or corresponding zoom lenses 16A-16C to illuminate the scene S. For a low zoom, i.e. a large field of view, illumination of part S 1 of scene S, LEDs 4 are on continuously during exposure of the cells 12, i.e. during a time interval [t₀;t₀+t_{frame}] in terms of Fig. 3. For division S2, LEDs 4 are on during a time interval [t₀+dt;t₀+t_{frame}-dt] and for division S3 during a time interval [t₀+2dt;t₀+t_{frame}-2dt].

As S1 is continuously illuminated in Fig. 7, optical power is still wasted for cells 12 that are not exposed. The invention allows, when using a sequential row wise exposure algorithm of the cells 12 as illustrated in Fig. 3, to subdivide the parts S1, S2, S3 of the scene S. This is illustrated in Fig. 8.

Illumination of the center by a zoom lens can also be used for auto-focus assist and/or for the white balancing/exposure choice functions which require illumination in frames before the actual picture-taking frame. In such an embodiment, power or current can be reduced in circumstances wherein multiple frames are used per picture taken. In preparatory frames, only the central part S3 of the scene S is illuminated (to same illumination value as in final picture or even a bit lower, as a function of camera requirements). The digital camera 1 is then instructed to use this central part only for auto focus assist, exposure regulation loop, white balancing etc.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A digital image capturing device (10) for capturing a scene comprising:
- a two-dimensional array of light-exposable cells (12) capable of capturing said scene;
- one or more light-emitting diodes (4) capable of illuminating said scene, and
- a controller (13) arranged to sequentially expose one or more of said light-exposable cells of said two-dimensional array to capture said scene and to selectively vary the illumination of various parts of said scene by said one or more light-emitting diodes during capturing of said scene in synchronization with the exposure of one or more of said cells.

2. The digital image capturing device (10) according to claim 1, wherein said device further comprises optical means (16; 16A, 16B, 16C) capable of directing light emitted by said one or more light-emitting diodes (4; 4A, 4B, 4C) and said controller (13) is arranged for controlling said light-emitting diodes and/or said optical means to selectively vary the illumination of said various parts of said scene.

3. The digital image capturing device (10) according to claim 1, wherein said controller (13) is arranged to sequentially expose rows of said two-dimensional array of cells and control optical means of said device to direct said light such that parts of said scene corresponding with one or more rows of exposed cells are selectively illuminated.

4. The digital image capturing device (10) according to claim 1, wherein optical means (16A, 16B, 16C) of said device comprises a variable zoom lens for directing said light and said controller (13) is arranged for controlling said zoom lens.

5. The digital image capturing device (10) according to claim 1, wherein said device comprises at least one light-emitting diode comprising one or more individually addressable cells to selectively vary the illumination of various parts of said scene.

6. The digital image capturing device (10) according to claim 1, wherein said device is arranged for exposing said two dimensional array of light-exposable cells (12) one or more times in preparatory frames before finally capturing said image of said scene and said controller (13) is arranged to selectively vary the illumination of various parts of said scene during said preparatory frames in synchronization with the exposure of one or more of said cells during said preparatory frames.

7. The digital image capturing device (10) according to claim 1, wherein said device is part of a mobile communication apparatus, such as a mobile phone (1).

8. A computer program loadable in a controller (13) of a digital image capturing device (10) comprising a two-dimensional array of light-exposable cells for capturing a scene and one or more light-emitting diodes (4) for illuminating said scene, wherein said computer program comprises software code portions for sequentially exposing one or more of said light-exposable cells of said two-dimensional array to capture said scene and for selectively varying the illumination of various parts of said scene by said one or more light-emitting diodes during capturing of said scene in synchronization with the exposure of one or more of said cells.

9. The computer program according to claim 8, further comprising code portions for controlling said light-emitting diodes (4; 4A, 4B, 4C) and/or optical means (16A, 16B, 16C) of said digital image capturing device for selectively varying the illumination of said various parts of said scene.

10. The computer program according to claim 8, further comprising code portions for sequentially exposing rows of said two-dimensional array of cells and for controlling said light-emitting diodes (4) and/or optical means (16) of said device to direct said light such that parts of said scene corresponding with one or more rows of exposed cells are selectively illuminated.

11. The computer program according to claim 8, further comprising code portions for controlling a variable zoom lens of said digital image capturing device (10) for selectively varying the illumination of said various parts of said scene in correlation with a zoom lens of said digital image capturing device.
